# FASCICULE DE BREVET EUROPEEN

(11) **EP 3 055 594 B1**
(45) Date de publication et mention de la délivrance du brevet: **08.11.2017**
(21) Numéro de dépôt: 14790234.0
(22) Date de dépôt: 09.10.2014
(51) Int. Cl.: F16J 15/02, F16J 15/06, F01D 11/00, F02K 1/72, F02K 1/80

(54) **JOINT D'ÉTANCHÉITÉ POUR INVERSEUR DE POUSSÉE DE NACELLE DE TURBORÉACTEUR**
DICHTUNG FÜR EINEN SCHUBUMKEHRER EINER TURBODÜSEN-TRIEBWERKSGONDEL
SEAL FOR TURBOJET ENGINE NACELLE THRUST REVERSER

(30) Priorité: 11.10.2013 FR 1359914
(43) Date de publication de la demande: 17.08.2016
(73) Titulaire: Safran Nacelles, 76700 Gonfreville-l'Orcher (FR)
(72) Inventeur: PROVOST, Fabrice, F-76133 Notre-Dame-du-Bec (FR)
(74) Mandataire: Gaillarde, Frédéric F. Ch.
(86) Numéro de dépôt international: PCT/FR2014/052563
(87) Numéro de publication internationale: WO 2015/052442

(56) Documents cités:
- CA-A1- 2 642 777
- FR-A1- 2 914 957
- US-A- 2 683 907
- US-A- 4 099 763

## Description

La présente invention concerne le domaine des joints d'étanchéité venant par exemple équiper un inverseur de poussée de nacelle de turboréacteur d'aéronef.

Un aéronef est mû par plusieurs ensembles propulsifs comprenant chacun un turboréacteur logé dans une nacelle. Une nacelle présente généralement une structure tubulaire suivant un axe longitudinal comprenant une section amont fixe constituée par une entrée d'air en amont du turboréacteur, une section médiane fixe destinée à entourer une soufflante du turboréacteur, et une section aval abritant des moyens d'inversion de poussée et destinée à entourer la chambre de combustion du turboréacteur, l'amont et l'aval de la nacelle étant définis par référence au sens d'écoulement du flux d'air dans la nacelle en fonctionnement jet direct, l'amont de la nacelle correspondant à une partie de la nacelle par laquelle le flux d'air pénètre, et l'aval correspondant à une zone d'éjection dudit flux d'air.

Le rôle d'un inverseur de poussée est, lors de l'atterrissage d'un avion, d'améliorer la capacité de freinage de celui-ci en redirigeant vers l'avant au moins une partie de la poussée générée par le turboréacteur. Dans cette phase, l'inverseur obstrue la veine du flux d'air froid traversant la nacelle, et dirige ce dernier vers l'avant de la nacelle, générant de ce fait une contre-poussée qui vient s'ajouter au freinage des roues de l'avion.

Les moyens mis en oeuvre pour réaliser cette réorientation du flux froid varient suivant le type d'inverseur. Cependant, dans tous les cas, la structure d'un inverseur comprend un ou plusieurs capots mobiles déplaçables entre, d'une part, une position déployée dans laquelle ils ouvrent dans la nacelle un passage destiné au flux dévié, et d'autre part, une position d'escamotage dans laquelle ils ferment ce passage. Ces capots peuvent remplir une fonction de déviation ou simplement d'activation d'autres moyens de déviation.

Dans le cas d'un inverseur à grilles, également connu sous le nom d'inverseur à cascade, la réorientation du flux d'air est effectuée par des grilles de déviation, le ou les capot(s) d'inverseur n'ayant qu'une simple fonction de coulissage sensiblement le long de l'axe longitudinal de la nacelle et visant à découvrir ou recouvrir ces grilles. Des portes de blocage complémentaires, également appelées volets, activées par le coulissement du capotage, permettent généralement une fermeture de la veine en aval des grilles de manière à optimiser la réorientation du flux froid.

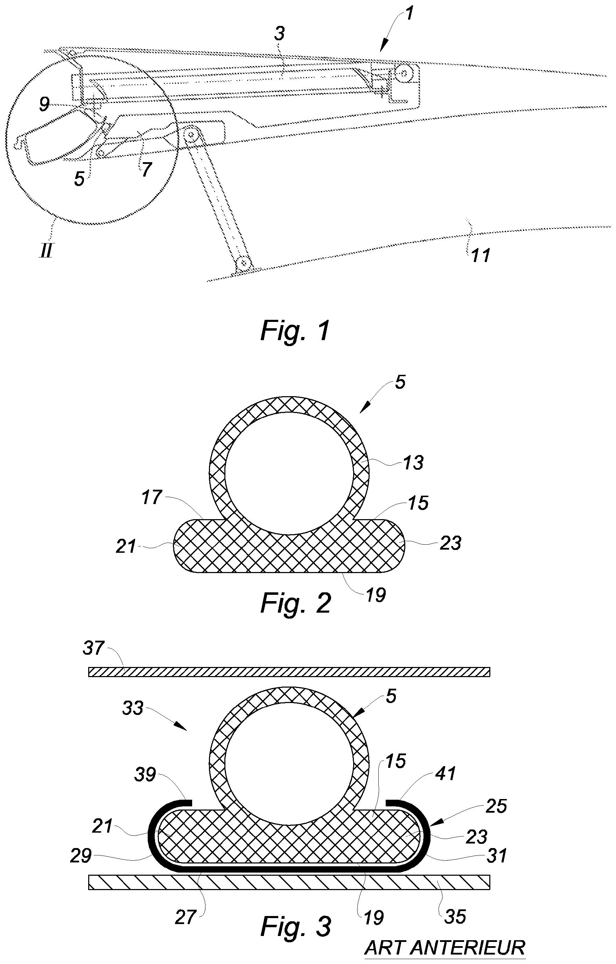

Dans un tel inverseur de poussée 1 à grilles 3 représenté de manière schématique sur la figure 1, il est nécessaire de prévoir un joint d'étanchéité 5 en matériau élastomère monté sur le capot 7 et venant en contact avec un bord de déviation 9 lorsque l'inverseur est en position fermée.

Dans cette position, il ne faut pas que de l'air circulant dans la veine d'air froid 11 sous l'effet d'une soufflante de turboréacteur (organes non représentés) puisse s'échapper de cette veine en direction des grilles 3 : le joint 5 permet de réaliser cette étanchéité.

On a représenté sur la figure 2 un exemple de réalisation du joint d'étanchéité 5, vu en coupe transversale, selon l'art antérieur.

Le joint 5 comprend un corps 13 tubulaire flexible et une base 15 relativement raide. La base 15 est plane au niveau de sa surface de support supérieure 17 sur laquelle repose le corps 13 du joint, et au niveau de sa surface d'appui inférieure 19. Les portions extrêmes 21 et 23 de la base 15 sont recourbées.

Le joint 5 est généralement monté dans un support 25, comme l'illustre la figure 3. Un tel support présente typiquement une section transversale en forme de « C », de forme complémentaire à celle définie par la surface d'appui 19 et par les portions extrêmes 21 et 23 de la base 15 du joint 5.

Le support 25 de joint présente une surface plane 27 et deux portions extrêmes recourbées 29 et 31 correspondant aux portions extrêmes 21 et 23 de la base 15 du joint 5.

L'ensemble 33 comprenant le joint 5 monté dans son support 25 est destiné à être positionné entre deux organes 35 et 37, l'organe 37 étant celui à étancher.

Le montage du joint dans son support est généralement réalisé en insérant manuellement ou grâce à un outil la base 15 du joint 5 dans son support 25.

Toutefois, la structure assez peu déformable de la base du joint réduit la capacité de déformation de cette base, ce qui complexifie l'opération d'insertion du joint dans son support.

Une solution de l'art antérieur permet de simplifier l'insertion et consiste à réduire sensiblement la longueur des surfaces planes 39 et 41 des portions extrêmes recourbées 29 et 31 du support 25 de joint. En effet, en réduisant sensiblement ces longueurs, les portions extrêmes 21 et 23 de la base 15 du joint 5 pénètre plus aisément dans les portions extrêmes recourbées 29 et 31 du support de joint.

Toutefois, un tel recouvrement limité peut entraîner un désengagement du joint de son support. Afin d'éviter un tel désengagement, une solution consiste à coller une partie de la base du joint dans le support de joint.

Pour cela, il est connu de coller soit la surface plane d'appui 19 de la base 15 du joint sur la surface plane 27 du support 25 de joint, soit les portions extrêmes recourbées 21 et 29 du joint 5 dans les portions extrêmes recourbées 29 et 31 dudit support.

Ces opérations de collage sont longues, coûteuses et fastidieuses, et la qualité du collage, c'est-à-dire le pourcentage de surface collée, ne peut être convenablement vérifiée une fois le joint monté dans son support. En outre, la présence de colle rend compliquées les opérations de remplacement du joint en cas d'usure.

Un exemple de joint d'étanchéité de l'art antérieur est également connu du document FR2914957. La présente invention vise à résoudre les inconvénients de l'art antérieur en proposant une solution technique fiable et peu coûteuse permettant une insertion facile du joint dans son support et évitant son arrachement.

A cet effet, la présente invention se rapporte à un joint d'étanchéité pour inverseur de poussée de nacelle de turboréacteur d'aéronef, ledit joint comprenant un corps de section transverse par rapport à un axe longitudinal du joint par exemple sensiblement circulaire, et une base destinée à être montée dans un support de joint, remarquable en ce que ladite base présente des jours espacés les uns des autres.

Ainsi, en prévoyant des jours dans la base du joint d'étanchéité, la base du joint selon l'invention est conformée pour recevoir des moyens pour le maintien du joint lorsque le joint est monté dans son support. Cela permet d'assurer un bon maintien du joint dans son support et d'éviter que le joint ne se désengage de son support.

Selon des caractéristiques toutes optionnelles du joint d'étanchéité selon l'invention :
- les jours sont sensiblement alignés entre eux le long de l'axe longitudinal du joint ;
- les jours sont positionnés à proximité d'une portion extrême longitudinale de la base du joint ;
- les jours sont sensiblement régulièrement espacés les uns des autres ;
- les jours présentent une forme sensiblement rectangulaire ;
- les jours traversent la base du joint le long d'un axe sensiblement vertical dudit joint ;
- la portion extrême longitudinale à proximité de laquelle sont positionnés les jours présente une section transverse par rapport l'axe longitudinal du joint sensiblement rectangulaire.

L'invention concerne également un ensemble comprenant un joint d'étanchéité selon l'invention, dont la base est montée dans un support de joint destiné à recevoir ledit joint, ledit support comprenant une pluralité de pattes de maintien espacées les unes des autres, ledit ensemble étant remarquable en ce que les pattes de maintien du support de joint traversent les jours du joint.

Selon des caractéristiques optionnelles se rapportant audit ensemble :
- les pattes de maintien du support de joint sont sensiblement alignées entre elles le long d'un axe longitudinal dudit support ;
- les pattes de maintien du support de joint sont positionnées au niveau d'une portion extrême longitudinale du support ;
- les pattes de maintien du support de joint sont sensiblement régulièrement espacées les unes des autres ;
- les pattes de maintien du support de joint présentent une section transverse par rapport à l'axe longitudinal du support sensiblement en forme de « L » ;
- le support de joint comprend une portion extrême longitudinale recourbée unique ;
- la longueur longitudinale des pattes de maintien du support de joint est sensiblement égale à celle des jours du joint d'étanchéité ;
- la longueur transversale des pattes de maintien du support de joint est sensiblement égale à celle de la portion extrême longitudinale correspondante de la base du joint.

La présente invention concerne enfin un inverseur de poussée à grilles pour nacelle de turboréacteur d'aéronef, comprenant au moins un capot mobile alternativement entre une position selon laquelle il recouvre lesdites grilles et une position selon laquelle il découvre lesdites grilles, ledit capot étant équipé d'un ensemble selon l'invention, dans lequel le joint d'étanchéité coopère avec un bord de déviation de cet inverseur de poussée lorsque ledit capot recouvre lesdites grilles.

D'autres caractéristiques, buts et avantages de la présente invention apparaîtront à la lecture de la description qui va suivre et à l'examen des figures ci-annexées, dans lesquelles :
- la figure 1 illustre un inverseur de poussée équipé d'un joint selon l'art antérieur ;
- la figure 2 représente schématiquement en coupe transversale un joint connu de l'art antérieur ;
- la figure 3 illustre le joint de la figure 2 monté dans un support selon l'art antérieur ;
- la figure 4 illustre schématiquement le joint d'étanchéité selon l'invention, en vue de dessus ;
- la figure 5 représente l'ensemble selon l'invention, comprenant le joint d'étanchéité monté dans son support, vu en coupe selon la ligne A-A de la figure 4 ;
- la figure 6 illustre le support selon l'invention, en vue isométrique ;
- la figure 7 représente schématiquement les étapes de montage du joint selon l'invention dans le support selon l'invention.

Sur l'ensemble des figures, des références identiques ou analogues désignent des organes ou ensembles d'organes identiques ou analogues.

Par ailleurs, dans la description et les revendications, on utilisera à titre non limitatif la terminologie longitudinal, vertical et transversal en référence au trièdre L, V, T indiqué aux figures.

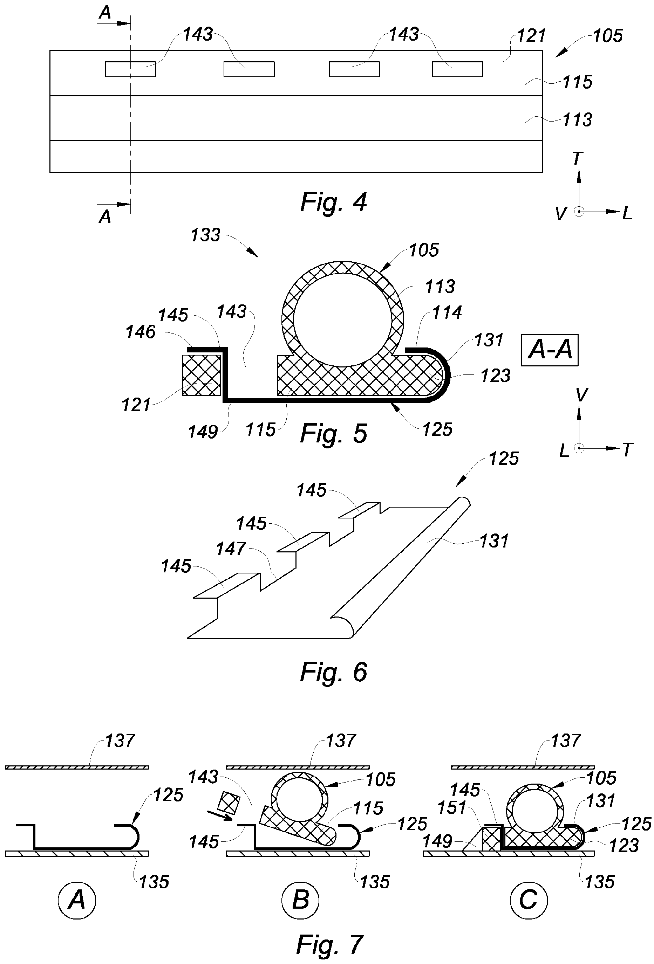

On se réfère à la figure 4, représentant le joint d'étanchéité selon l'invention vu de dessus.

Le joint d'étanchéité 105 comprend un corps 113 tubulaire et une base 115 recevant ledit corps 113.

Bien sûr, le corps 113 du joint peut présenter une forme autre que cylindrique, par exemple parallélépipédique.

Selon l'invention, le joint 105 présente une pluralité de jours 143 de forme sensiblement rectangulaire.

Ces jours 143 sont espacés les uns des autres et sensiblement alignés entre eux le long d'un axe longitudinal L du joint 105.

Les jours 143 sont de préférence positionnés à proximité d'une portion extrême longitudinale 121 de la base 115 du joint 105, mais il va de soi que les jours 143 peuvent toutefois être éloignés ou rapprochés de cette portion extrême longitudinale, le long de l'axe transversal T du joint 105.

En outre, selon la variante de réalisation représentée sur la figure 4, les jours 143 sont régulièrement espacés les uns des autres. Cela permet une bonne répartition des efforts lorsque le joint 105 est monté dans son support. Cette variante n'est bien entendu pas limitative, et les jours peuvent être non régulièrement espacés les uns des autres si l'homme du métier y trouve un intérêt particulier.

Les jours 143 forment des passages dans la base 115 du joint 105, depuis la surface de support supérieure sur laquelle repose le corps 113 tubulaire jusqu'à la surface d'appui inférieure du joint destinée à être en contact avec le support de joint.

Ces parties ajourées de la base du joint, le long de l'axe vertical du joint permettent, comme décrit plus en détails dans la suite de la description, de recevoir des pattes de maintien solidaire du support de joint assurant le bon maintien du joint dans son support.

Le joint 105 est destiné à être monté dans un support de joint, et maintenu dans ce support au niveau de sa base 115.

La figure 5 illustre un tel montage selon l'invention, vu en coupe transversale selon la droite (AA) de la figure 4.

Le joint 105 précédemment décrit est inséré dans son support 125 par la base 115 dudit joint, formant un ensemble 133.

L'ensemble ainsi constitué est par exemple destiné à être positionné entre une portion amont du capot 7 (visible figure 1) d'un inverseur de poussée à grilles et le bord de déviation 9 dudit inverseur, afin d'empêcher que de l'air circulant dans la veine d'air froid 11 sous l'effet de la soufflante du turboréacteur ne s'échappe de cette veine en direction des grilles 3.

A cet effet, le joint 105 de l'ensemble 133 coopère avec le bord de déviation de l'inverseur de poussée lorsque le capot recouvre les grilles de l'inverseur.

On retourne à la figure 5. La portion extrême longitudinale 121 à proximité de laquelle sont positionnés les jours 143 présente une section transverse par rapport l'axe longitudinal du joint sensiblement rectangulaire, tandis que la portion extrême 123 opposée présente une section transverse de forme sensiblement de D retourné.

Le support 125 selon l'invention, sur lequel repose la base 115 du joint 105, présente quant à lui une pluralité de pattes de maintien 145 en forme d'équerres, présentant une section transverse par rapport à l'axe longitudinal L du support sensiblement en forme de « L » ou de « demi-T ».

Les pattes de maintien 145 sont positionnées au niveau de la portion extrême 147 longitudinale du support 125 et traversent les jours 143 du joint 105.

Comme représenté sur la figure 6 illustrant le support 125 selon l'invention en vue isométrique, les pattes de maintien 145 sont de préférence sensiblement alignées entre elles le long d'un axe longitudinal L dudit support et sensiblement régulièrement espacées les unes des autres.

La longueur de ces pattes de maintien selon l'axe longitudinal du support correspond sensiblement à celle des ouvertures 143 du joint 105. Pour les besoins de l'invention, la longueur de ces pattes peut toutefois être amenée à être réduite.

On se réfère à nouveau à la figure 5. Lorsque le joint 105 est positionné dans son support 125, la portion supérieure 146 de chaque patte de maintien 145 du support (visible sur la figure 5) recouvre sensiblement la totalité de la portion extrême longitudinale 121 correspondante de la base 115 du joint 105. En d'autres termes, la longueur transversale des pattes de maintien 145 du support 125 est sensiblement égale à celle de la portion extrême longitudinale 121 correspondante de la base 115 du joint 105.

Les pattes de maintien 145 du support 125 sont positionnées au niveau de la portion extrême 147 longitudinale du support, plane, tandis que la portion extrême longitudinale 131 opposée à ladite portion extrême 147 présente une portion recourbée de section transverse par rapport à l'axe longitudinal du support sensiblement en forme de C retourné, de forme complémentaire à celle définie par le joint 105 disposé dans le support.

La portion extrême recourbée 131 présente une surface plane 141 de longueur plus importante que celle généralement prévue dans l'art antérieur. Cela est rendu possible grâce au caractère unitaire de cette portion extrême recourbée, qui permet une insertion facile du joint dans son support.

Le montage du joint 105 dans son support 125 est réalisé selon les étapes A à C suivantes, illustrées sur la figure 7 :
- étape A : le support 125 est préalablement fixé sur un organe 135 en regard de l'organe 137 à étancher, par exemple par collage ou soudage, ou encore par tout autre moyen de fixation connu de l'homme du métier ;
- étape B : le joint 105 est positionné dans son support 125, par exemple manuellement, en faisant passer les pattes de maintien 145 à travers les ouvertures 143 du joint ;
- étape C : le joint 105 est inséré à force sans déformation de la base 115 dans le support 125. Une telle insertion sans déformation est autorisée grâce aux jours 143 qui reçoivent les pattes de maintien 145 du support, ce qui permet de faire glisser la base du joint sans déformation, jusqu'à faire coopérer la portion extrême recourbée 123 du joint avec la portion extrême recourbée 131 du support. Une fois le joint positionné dans son support, de la colle 149 est disposée tout le long de la paroi latérale 151 du joint 105.

Grâce à la présente invention, l'insertion du joint dans son support est grandement facilitée par rapport à l'art antérieur, et la résistance à l'arrachement du joint de son support est accrue.

La présence de jours dans le joint conformés pour recevoir des pattes de maintien du support de joint constitue une solution simple à mettre en oeuvre, facilitant l'insertion du joint dans son support et offrant une bonne résistance à l'arrachement.

En outre, les opérations de collages s'effectuent grâce à la présente invention au niveau de la paroi latérale du joint, et non au niveau de son fond comme le prévoyait l'art antérieur, ce qui permet de réduire la quantité de colle nécessaire au bon maintien du joint dans son support.

De plus, le cordon de colle est également facilement réalisable et contrôlable.

Enfin, comme il va de soi, l'invention ne se limite pas aux seules formes de réalisation de ces joint, support de joint, ensemble comprenant le joint monté dans son support et inverseur de poussée muni d'un tel ensemble, décrites ci-dessus uniquement à titre d'exemples illustratifs, mais elle embrasse au contraire toutes les variantes faisant intervenir les équivalents techniques des moyens décrits ainsi que leurs combinaisons si celles-ci entrent dans le cadre de l'invention.

## Revendications

1. Joint d'étanchéité (105) pour inverseur de poussée de nacelle de turboréacteur d'aéronef, ledit joint comprenant un corps (113) de section transverse par rapport à un axe longitudinal (L) du joint par exemple sensiblement circulaire, et une base (115) destinée à être montée dans un support de joint, **caractérisé en ce que** ladite base présente des jours (143) espacés les uns des autres, lesdits jours étant destinés à être traversés par des pattes de maintien du support de joint.

2. Joint d'étanchéité (105) selon la revendication 1, **caractérisé en ce que** les jours (143) sont sensiblement alignés entre eux le long de l'axe longitudinal (L) du joint.

3. Joint d'étanchéité (105) selon l'une des revendications 1 ou 2, **caractérisé en ce que** les jours (143) sont positionnés à proximité d'une portion extrême (121) longitudinale de la base (115) du joint.

4. Joint d'étanchéité (105) selon l'une quelconque des revendications 1 à 3, **caractérisé en ce que** les jours (143) sont sensiblement régulièrement espacés les uns des autres.

5. Joint d'étanchéité (105) selon l'une quelconque des revendications 1 à 4, **caractérisé en ce que** les jours (143) présentent une forme sensiblement rectangulaire.

6. Joint d'étanchéité (105) selon l'une quelconque des revendications 1 à 5, **caractérisé en ce que** les jours (143) traversent la base (115) du joint le long d'un axe sensiblement vertical (V) dudit joint.

7. Joint d'étanchéité (105) selon l'une quelconque des revendications 1 à 6, **caractérisé en ce que** la portion extrême longitudinale (121) à proximité de laquelle sont positionnés les jours (143) présente une section transverse par rapport l'axe longitudinal (L) du joint sensiblement rectangulaire.

8. Ensemble (133) comprenant un joint d'étanchéité (105) défini selon l'une quelconque des revendications 1 à 7, dont la base (115) est montée dans un support (125) de joint destiné à recevoir ledit joint (105), ledit support comprenant une pluralité de pattes de maintien (145) espacées les unes des autres, ledit ensemble étant **caractérisé en ce que** les pattes de maintien (145) du support de joint traversent les jours (143) du joint.

9. Ensemble (133) selon la revendication 8, **caractérisé en ce que** les pattes de maintien (145) du support (125) de joint sont sensiblement alignées entre elles le long d'un axe longitudinal (L) dudit support.

10. Ensemble (133) selon l'une des revendications 8 ou 9, **caractérisé en ce que** les pattes de maintien (145) du support (125) de joint sont positionnées au niveau d'une portion extrême (147) longitudinale du support.

11. Ensemble (133) selon l'une quelconque des revendications 8 à 10, **caractérisé en ce que** les pattes de maintien (145) du support (125) de joint sont sensiblement régulièrement espacées les unes des autres.

12. Ensemble (133) selon l'une quelconque des revendications 8 à 11, **caractérisé en ce que** les pattes de maintien (145) du support (125) de joint présentent une section transverse par rapport à l'axe longitudinal (L) du support sensiblement en forme de « L ».

13. Ensemble (133) selon l'une quelconque des revendications 8 à 12, **caractérisé en ce que** le support (125) de joint comprend une portion extrême longitudinale (131) recourbée unique.

14. Ensemble (133) selon l'une quelconque des revendications 8 à 13, **caractérisé en ce que** la longueur longitudinale des pattes de maintien (145) du support (125) de joint est sensiblement égale à celle des jours (143) du joint d'étanchéité (105).

15. Ensemble (133) selon l'une quelconque des revendications 8 à 14, **caractérisé en ce que** la longueur transversale des pattes de maintien (145) du support (125) de joint est sensiblement égale à celle de la portion extrême longitudinale (121) correspondante de la base (115) du joint (105).

16. Inverseur de poussée (1) à grilles (3) pour nacelle de turboréacteur d'aéronef, comprenant au moins un capot (7) mobile alternativement entre une position selon laquelle il recouvre lesdites grilles et une position selon laquelle il découvre lesdites grilles, ledit capot étant équipé d'un ensemble (133) défini selon l'une quelconque des revendications 8 à 15, dans lequel le joint d'étanchéité (105) coopère avec un bord de déviation (9) de cet inverseur de poussée lorsque ledit capot recouvre lesdites grilles.

## Patentansprüche

1. Dichtung (105) für Schubumkehr für eine Turbotriebwerksgondel eines Luftfahrzeugs, wobei die besagte Dichtung einen Korpus (113) mit einem im Verhältnis zu einer Längsachse (L) der Dichtung beispielsweise in etwa kreisförmigen Querschnitt umfasst, sowie eine Basis (115), die dazu bestimmt ist, um auf einem Dichtungshalter montiert zu werden, **dadurch gekennzeichnet, dass** die besagte Basis voneinander beabstandete Öffnungen (143) aufweist, wobei die besagten Öffnungen dazu bestimmt sind, von Befestigungsklemmen des Dichtungshalters durchquert zu werden.

2. Dichtung (105) nach Anspruch 1, **dadurch gekennzeichnet, dass** die Öffnungen (143) entlang der Längsachse (L) der Dichtung in etwa aneinandergereiht sind.

3. Dichtung (105) nach einem der Ansprüche 1 oder 2, **dadurch gekennzeichnet, dass** die Öffnungen (143) in der Nähe eines Längsendabschnitts (121) der Basis (115) der Dichtung positioniert sind.

4. Dichtung (105) nach einem der Ansprüche 1 bis 3, **dadurch gekennzeichnet, dass** die Öffnungen (143) in etwa regelmäßig voneinander beabstandet sind.

5. Dichtung (105) nach einem der Ansprüche 1 bis 4, **dadurch gekennzeichnet, dass** die Öffnungen (143) eine in etwa rechteckige Form aufweisen.

6. Dichtung (105) nach einem der Ansprüche 1 bis 5, **dadurch gekennzeichnet, dass** die Öffnungen (143) die Basis (115) der Dichtung entlang einer in etwa vertikalen Achse (V) der besagten Dichtung durchqueren.

7. Dichtung (105) nach einem der Ansprüche 1 bis 6, **dadurch gekennzeichnet, dass** der Längsendabschnitt (121), in dessen Nähe die Öffnungen (143) positioniert sind, einen im Verhältnis zur Längsachse (L) in etwa rechteckigen Querschnitt aufweist.

8. Einheit (133), eine Dichtung (105) nach einem der Ansprüche 1 bis 7 umfassend, deren Basis (115) auf einem Dichtungshalter (125) montiert ist, der dazu bestimmt ist, die besagte Dichtung (105) aufzunehmen, wobei der besagte Halter eine Vielzahl von Befestigungsklemmen (145) umfasst, die voneinander beabstandet sind, wobei die besagte Einheit **dadurch gekennzeichnet ist, dass** die Befestigungsklemmen (145) des Dichtungshalters die Öffnungen (143) der Dichtung durchqueren.

9. Einheit (133) nach Anspruch 8, **dadurch gekennzeichnet, dass** die Befestigungsklemmen (145) des Dichtungshalters (125) entlang einer Längsachse (L) des besagten Halters in etwa aneinandergereiht sind.

10. Einheit (133) nach einem der Ansprüche 8 oder 9, **dadurch gekennzeichnet, dass** die Befestigungsklemmen (145) des Dichtungshalters (125) im Bereich eines Längsendabschnitts (147) des Halters positioniert sind.

11. Einheit (133) nach einem der Ansprüche 8 bis 10, **dadurch gekennzeichnet, dass** die Befestigungsklemmen (145) des Dichtungshalters (125) in etwa regelmäßig voneinander beabstandet sind.

12. Einheit (133) nach einem der Ansprüche 8 bis 11, **dadurch gekennzeichnet, dass** die Befestigungsklemmen (145) des Dichtungshalters (125) einen Querschnitt im Verhältnis zur Längsachse (L) des Halters in etwa in Form eines "L" aufweisen.

13. Einheit (133) nach einem der Ansprüche 8 bis 12, **dadurch gekennzeichnet, dass** der Dichtungshalter (125) einen einzigen umgebogenen Längsendabschnitt (131) umfasst.

14. Einheit (133) nach einem der Ansprüche 8 bis 13, **dadurch gekennzeichnet, dass** die Länge der Befestigungsklemmen (145) des Dichtungshalters (125) in Längsrichtung in etwa gleich jener der Öffnungen (143) der Dichtung (105) ist.

15. Einheit (133) nach einem der Ansprüche 8 bis 14, **dadurch gekennzeichnet, dass** die Länge der Befestigungsklemmen (145) des Dichtungshalters (125) in querlaufender Richtung in etwa gleich jener des Längsendabschnitts (121) der Basis (115) der Dichtung (105) ist.

16. Schubumkehr (1) mit Gittern (3) für eine Turbotriebwerksgondel eines Luftfahrzeugs, zumindest eine Haube (7) umfassend, die abwechselnd zwischen einer Position, in der sie die besagten Gitter abdeckt und einer Position beweglich ist, in der sie die besagten Gitter freilegt, wobei die besagte Haube mit einer Einheit (133) nach einem der Ansprüche 8 bis 15 bestückt ist, wobei die Dichtung (105) mit einer Ablenkkante (9) dieser Schubumkehr zusammenwirkt, wenn die besagte Haube die besagten Gitter abdeckt.

## Claims

1. A seal (105) for a thrust reverser of an aircraft turbojet engine nacelle, said seal comprising a body (113) of a transverse section relative to a longitudinal axis (L) of the seal for example substantially circular, and a base (115) intended to be mounted in a seal support, **characterized in that** said base has apertures (143) spaced from each other, said apertures being intended to be crossed by holding lugs of the support seal.

2. The seal (105) according to claim 1, **characterized in that** the apertures (143) are substantially aligned with each other along the longitudinal axis (L) of the seal.

3. The seal (105) according to any of claims 1 or 2, **characterized in that** the apertures (143) are positioned near a longitudinal end portion (121) of the base (115) of the seal.

4. The seal (105) according to any one of claims 1 to 3, **characterized in that** the apertures (143) are substantially regularly spaced from each other.

5. The seal (105) according to any one of claims 1 to 4, **characterized in that** the apertures (143) have a substantially rectangular shape.

6. The seal (105) according to any one of claims 1 to 5, **characterized in that** the apertures (143) cross the base (115) of the seal along a substantially vertical axis (V) of said seal.

7. The seal (105) according to any one of claims 1 to 6, **characterized in that** the longitudinal end portion (121) near which the apertures (143) are positioned, has a transverse section relative to the longitudinal axis (L) of the substantially rectangular seal.

8. An assembly (133) comprising a seal (105) defined according to any one of claims 1 to 7, whose base (115) is mounted in a seal support (125) intended to receive said seal (105), said support comprising a plurality of holding lugs (145) spaced from each other, said assembly being **characterized in that** the holding lugs (145) of the seal support cross the apertures (143) of the seal.

9. The assembly (133) according to claim 8, **characterized in that** the holding lugs (145) of the seal support (125) are substantially aligned with each other along a longitudinal axis (L) of said support.

10. The assembly (133) according to any one of claims 8 or 9, **characterized in that** the holding lugs (145) of the seal support (125) are positioned at a longitudinal end portion (147) of the support.

11. The assembly (133) according to any one of claims 8 or 9, **characterized in that** the holding lugs (145) of the seal support (125) are substantially regularly spaced from each other.

12. The assembly (133) according to any one of claims 8 to 11, **characterized in that** the holding lugs (145) of the seal support (125) have a transverse section relative to the longitudinal axis (L) of the substantially «L»-shaped support.

13. The assembly (133) according to any one of claims 8 to 12, **characterized in that** the seal support (125) comprises a single curved longitudinal end portion (131).

14. The assembly (133) according to any one of claims 8 to 13, **characterized in that** the longitudinal length of the holding lugs (145) of the seal support (125) is substantially equal to the length of the apertures (143) of the seal (105).

15. The assembly (133) according to any one of claims 8 to 14, **characterized in that** the transverse length of the holding lugs (145) of the seal support (125) is substantially equal to the length of the corresponding longitudinal end portion (121) of the base (115) of the seal (105).

16. A thrust reverser (1) with cascades (3) for an aircraft turbojet engine nacelle, comprising at least one cowl (7) reciprocally movable between a position according to which it covers said cascades and a position according to which it uncovers said cascades, said cowl being equipped with an assembly (133) defined according to any one of claims 8 to 15, in which the seal (105) cooperates with a deflection edge (9) of this thrust reverser when said cowl covers said cascades.
